**Europäisches Patentamt**

**European Patent Office**

**Office européen des brevets**

(11) Publication number : **0 545 704 A1**

## EUROPEAN PATENT APPLICATION

(21) Application number : **92311026.6**

(51) Int. Cl.$^5$ : **F02B 51/04, F02M 27/04**

(22) Date of filing : **03.12.92**

(30) Priority : **06.12.91 JP 322977/91**

(43) Date of publication of application :
**09.06.93 Bulletin 93/23**

(84) Designated Contracting States :
**BE CH DE FR GB IT LI NL SE**

(71) Applicant : **SHINFUJI KOGYO KABUSHIKI KAISHA**
**7-6, 3-Chome, Tenma, Kita-ku**
**Osaka-shi Osaka-fu (JP)**

(72) Inventor : **Sakuma, Tetsuo**
**9-46 Hinode-cho**
**Suita-shi, Osaka-fu (JP)**

(74) Representative : **Barker, Rosemary Anne et al**
**c/o Mewburn Ellis, 2 Cursitor Street**
**London EC4A 1BQ (GB)**

(54) **Process for treating air and liquid fuel with a magnetic field for combustion engine.**

(57)    For complete combustion of fuel and improvement in combustion efficiency, so as to be effective for pollution control and save fuel resources and fuel cost, a method of combustion of fuel in an engine is proposed comprising exposing air supplied to the combustion engine to a magnetic field by mounting a magnet having a magnetic flux density of higher than about 300 G but lower than about 3000 G at the S pole on an air supply pipe near a boiler of the combustion engine, with its S pole brought into close contact therewith.

EP 0 545 704 A1

The present invention relates to a method of combustion of a fuel, especially a method of treating air to be supplied to a combustion engine of an automobile or the like.

It has been advanced a proposal that magnetic treatment of any fuel is effective in saving fuel cost in combustion engines of automobiles, ships and so on and such a treatment has been often attempted.

The present inventor disclosed a magnetic treating method of a hydrocarbon fuel in the Japanese Patent Application KOKAI No. HEI 1-215324. This method comprises exposing a hydrocarbon fuel to a magnetic field from a magnet having a magnetic flux density of about 5 -18 gauss (G) at the S pole and magnetic flux density of lower than about 6 gauss (G) at the N pole, wherein the ratio of the magnetic flux density at the N pole to at the S pole magnet is equal to or less than about 0.5. By this method, the combustion efficiency was successfully raised by about 30% at a maximum. Then by subjecting to an S pole magnetic treatment the air supplied for burning the hydrocarbon fuel thus magnetically treated, the combustion efficiency was found to be further improved.

The object of the present invention is to provide a method of combustion of a fuel for an engine, especially treatment of air to be supplied to the combustion engine, for ensuring complete combustion of fuel and for improving combustion efficiency, which is effective for pollution control, for saving fuel resources and for fuel saving.

The present invention relates to a method of combustion of a fuel for an engine which comprises exposing air supplied to the combustion to a magnetic field of a magnetic flux density of from 300 gauss to 3000 gauss at the S pole near a boiler of a combustion engine. Further, the present invention provides a method of combustion combining the above method with a fuel treatment in which the fuel is exposed to a magnetic field from a magnet having a magnetic flux density of about 5 - 18 gauss at the S pole and a magnetic flux density of less than about 6 gauss at the N pole wherein the ratio of the magnetic flux density at the N pole to the magnetic flux density at the S pole is equal to or less than about 0.5.

According to the present invention, the air used for the combustion may be exposed to the magnetic field, for instance, within the air supply pipe. Use of a magnet for exposing air to a magnetic field is most desirable, but if necessary, an electromagnet may be used or a predetermined magnetic field can be formed in the air supply pipe by way of electromagnetic induction.

When using a magnet, the S pole of the magnet having a predetermined magnetic flux density is placed on the air supply pipe of an engine such as any type of engine, boiler or the like. The magnet is placed the nearer to the gas inlet of the engine, the better result can be obtained. Preferable result is obtained by placing it within 3 m from the gas inlet of the engine as the length of the air supply pipe.

In the cases of a power generator, a ships' engine or a boiler, use of a 1500 G magnet per a unit of 100 HP engine is proper as a standard. Accordingly, for a 200 HP engine, use of two 1500 G magnets or one 3000 G magnet is proper. Which magnet to use should be determined, taking account of the relationship between the horsepower of the engine and the recommended number of magnets to mount on the air supply pipe. In the cases of cars, appreciable effect may be achieved with a 1000 - 1500 G magnet. On gasoline car air supply pipes, diesel car air supply pipes and up to 10 t diesel truck air supply pipes, one piece of magnet (40 mm × 40 mm × 40 mm) per cylinder preferably may be used, but two pieces or more of magnets (40 mm × 40 mm × 40 mm) per cylinder on larger than 10 t diesel trucks.

The flow velocity of the air passing through the air supply pipe is fairly high and therefore, the magnetic treatment should be performed instantaneously. On this account, satisfying result cannot be achieved by the exposure in a too low magnetic field. Preferable magnetic flux density is from about 300 G to about 3000 G. Higher than 3000 G magnetic flux density may affect other measuring instruments, and only exposure on the S pole is effective.

The fuels in the present specification includes hydrocarbon fuels such as heavy oil, light oil, kerosene and gasoline, being petroleum fractions, products of dry or destructive distillation of coal and so on.

Exposing hydrocarbon fuels to the predetermined magnetic field, according to the present invention, may be done by inserting a magnetic metal having a specified magnetic flux density into or placing it in a fuel tank, for example, an automobile's fuel tank, or if necessary, by inserting it into or replacing it in a fuel stockpiling or storing tank, for example, an oil-feeding tank of a gas station, to allow it to be immersed in or in direct contact with the fuel, or by arranging it in a fuel circulation pipe or distillation line (for example, a coolant or a storage tank) and so forth. For exposing any fuel to a magnetic field, direct contact of a magnetic metal with the fuel is not necessarily required, but it is also effective to use such an arrangement as to apply the predetermined magnetic flux density on the fuel. In this way, the fuel may be exposed to the predetermined magnetic field by controlling the relative positions between the container or the pipe and the magnetic metal.

In exposing any fuel to a magnetic field, use of a magnetic metal is most preferable, but formation of the designated magnetic field in the fuel by use of an electromagnet or by electromagnetic induction, as necessary, is permissible.

2

The magnetic metal suitable for use in the magnetic treatment of hydrocarbon fuel of the present invention should have substantially low magnetic flux density than the ordinary magnet, yet with its S pole higher in magnetic flux density and N pole lower.

Such a magnet is not common, but when a long metal having a low residual magnetic flux density is at an end brought into contact with an N pole of a magnetizer, a magnet having a S pole but no or a very weak N pole is obtained. The strength of the S pole may be adjusted by choosing the type of metal used, the residual magnetic flux density of the metal, the magnetic flux density of the magnetizer, the time duration of its contacting with the N pole and so on. The strength of the N pole is adjustable by choosing the type of the metal used, the magnetic flux density of the magnetizer's N pole and its contact time duration, the ratio of the end unit area of the metal to be magnetized to its length, and other factors. Even if the magnet's N and S poles have identical magnetic flux density, the magnetic field in the fuel may be controlled within the designated range by appropriately adjusting their relative installing positions. But in that event, its N pole is not necessarily brought into contact with the fuel, but its S pole is in contact with the fuel.

In order to expose a fuel to a magnetic field, the magnetic metal should preferably be arranged in whatever position where it exerts the designated magnetic flux density on the fuel. The aforementioned requirement is of course not mandatory, because the fuel in the tank is always subjected to repetition of stirring, convective flowing and circulation. The object may be achieved, even using a small amount of magnetic metal, by stirring rendered in combination, or by taking a duration of ample treating time.

The duration of time for exposing fuel to a magnetic field may be very short, when ample amount of the magnetic metal is used, but the treating time duration should be extended, with decreasing amounts of the magnetic metal. As the fuel is placed outside the magnetic field, after exposed thereto, however, the effect of the treatment tends to be lost with the passage of time; and therefore, the effect would be inadequate, even after a prolonged treating time duration, if the amount of the magnetic metal was too small. Accordingly, it is generally preferable to use 300 g, more preferably about 500 g or more per 100 liter of the fuel, of a magnetic metal having a designated magnetic flux density. It is, of course, proper to adequately adjust the amount of the magnetic metal used, according to its shape, how to arrange it and how to make the treatment with it (placing it stationarily or circulating it or in a like manner) or the duration of practical treating time, and so forth, the aforementioned amount being not limitative. When the magnetic metal is mounted on the fuel tank of an automobile or the like, the fuel is used simultaneously as being treated and, therefore, its amount needed is not much, but when using it on a stockpiling tank, a substantial time will normally elapse, before the fuel is used, after withdrawn therefrom. It is, therefore, preferable to treat the fuel for a relatively long period of time, using an adequate amount of magnetic metal.

The shape and structure of the treating member for fuel saving of the present invention are not restrictive. For example, a bar, comb, plate or tube shape magnetic metal may be used as a treating member for fuel saving or such a magnetic metal may be fixed to a tank wall or within a pipe or arranged as a stirring vane or a baffle or the like.

As the S pole treatment of the present invention is applied to the air supplied to the combustion engine, when burning a hydrocarbonic fuel subjected to this magnetic treatment, the combustion efficiency is still improved and black smoke scarcely comes out of a diesel motorcar. By jointly using these two magnetic treatments, the hydrocarbonic fuel is believed to be completely burned. On this account, the method of treating air of the present invention has not only the fuel cost reduction effect, but the pollution control effect by reducing black smoke.

The present invention is described hereinbelow in connection with preferred embodiments thereof. It should be noted that in these embodiments, the magnetic flux density is indicated in gauss at the part of the integral magnetic metal where the highest magnetic flux density exhibits, unless otherwise specified.

Example 1

Four pieces of magnetic metal (S pole magnetic flux density: 10 G, N pole magnetic flux density: 3 G, 15 × 20 × 55 mm$^3$, 170 g) were thrown into a fuel tank (capacity about 55 lit.) of a diesel motorcar for riding, and the amount of the light oil consumed was measured after running a predetermined distance in 5 hr. At this time, the amount of the light oil consumed was again measured, when the air exposed to a magnetic field, with a magnet mounted on the air supply pipe to the engine was supplied. The experiment was carried out in the order mentioned hereunder:

1. The fuel was treated with the magnetic metal, but the air was not exposed to the magnetic field.
2. The fuel was treated with the magnetic metal, and the air was exposed to a S pole magnet of 300 G.
3. The fuel was treated with the magnetic metal, and the air was exposed to a S pole magnet of 3000 G.
4. The fuel was treated with the magnetic metal, and the air was exposed to a N pole magnet of 3000 G.

5. Non-treatment (the fuel was not treated with the magnetic metal, and the air was not exposed to magnetic field)

The measurements were all taken on an expressway at a mean speed of 100 km per hr. The results are shown in Table 1.

Type of the car used for the test:

Ford 2000 cc, 1984 model

Number of years in use: 7 yr

Table 1:

| | 1 fuel treatment with magnet alone | 2 fuel treatment with magnet + air exposure to s pole magnet of 300 G | 3 fuel treatment with magnet + S pole magnet of 3000 G | 4 fuel treatment with magnet + N pole magnet of 3000 G | 5 Without treatment |
|---|---|---|---|---|---|
| mileage (km) | 181 | 181 | 181 | 181 | 181 |
| consumption of light oil (lit) | 13.5 | 13.2 | 12.8 | 14.6 | 16.7 |
| mileage per fuel (km/lit) | 13.40 | 13.71 | 14.14 | 12.39 | 10.84 |
| index of mileage | 124 | 126 | 130 | 114 | 100 |

When the air supplied to the heat engine is exposed to a magnetic field with a S pole magnet of 3000 G, the mileage index is 130, but when the air is exposed to a magnetic field with a N pole magnet of 3000 G, the mileage index is 114, suggesting that the air treatment with an N pole magnet will contrarily exacerbate the fuel cost efficiency.

Example 2

A combustion test was carried out, with the magnetic treatment of the present invention applied to a ship's combustion engine. In this ship's combustion engine, a stopper is so set that if the engine turning lever is brought to the maximum, only a predetermined amount of fuel is supplied. Accordingly, the maximum number of revolutions of the engine is proportional to the combustion efficiency. Fifteen pieces of a magnetic metal (S pole magnetic flux density: 10 G, N pole magnetic flux density: 3 G, $15 \times 20 \times 55$ mm$^3$, 170 g) (totalling 2550 g) were inserted into a fuel tank (capacity: about 500 lit) of a 4.93 t small ship and the maximum number of revolutions was measured 20 hr later. At this time, the maximum number of revolutions was again measured, when a magnet having magnetic flux density of a 2000 G at the S pole was mounted on an air supply pipe near the engine. The results of these measurements were compared with the maximum number of revolutions obtained without applying the treatment in Table 2.

Ship used for the test:

Ship: A 4.93 t trawl-boat
Main engine: Yammar 6CHC-T (Eng. No. 2260), 1980 model
Number of years in commission:          10 yr
50 PS $\times$ 1440 rpm (Propeller: 490 rpm, R/G ratio: both forward and back 2.94)
(When the boat is equipped with a turbine and an intercooler, 190 PS $\times$ 2800 rpm)

Table 2:

|  | Without treatment | 20 hr after insertion of magnetic metal | insertion of magnetic metal + air treatment with S pole magnet of 2000 G |
|---|---|---|---|
| Maximum revolutions (rpm) | 2700 | 2850 | 2880 |

In the treatment of the fuel with the magnetic metal, the maximum revolutions of the engine was increased by 150 revolutions. Further, when the air exposure to the magnetic field was combined therewith, it was raised further by 30 revolutions, thus attesting to the effectiveness of the present invention.

Example 3

The consumption of gasoline was measured, after running a predetermined distance in 20 hr, with 4 pcs of magnetic metal (S pole magnetic flux density of 10 G, N pole magnetic flux density of 3 G, $15 \times 20 \times 55$ mm$^3$, 170 g) inserted into a fuel tank of a 1500 cc family gasoline car, a van. Then the consumption of gasoline was measured, when a magnet having a magnetic flux index of 1500 G at the S pole was mounted on the air supply pipe near the engine at this time. The results obtained in this way were compared in the consumption of gasoline with that obtained without applying these treatments.

All of these measurements were carried out on an expressway at a mean speed of 90 km per hr.

Type of the car used in the test:

Nissan Sunny, a van, 1500 cc, 1988 model
The results are shown in Table 3.

Table 3:

| | insertion of magnetic metal | insertion in magnetic metal + air treatment with S pole magnet of 1500 G | without treatment |
|---|---|---|---|
| total mileage (km) | 181 | 181 | 181 |
| consumption of light oil (lit) | 10.90 | 10.52 | 14.84 |
| mileage per unit fuel (km/lit) | 16.6 | 17.2 | 12.2 |
| mileage index | 136 | 141 | 100 |

The mileage index, when the magnetic metal was inserted into the fuel tank, was 136, and by exposing the supply air to a magnetic field of 1500 G, it was raised to 141, thus attesting to the usefulness of the method of the present invention.

The joint use of the magnetic treating process of air of the present invention and the magnetic treatment of a fuel enables further improvement in the combustion efficiency of the fuel and notable increases in the motorcar's mileage and the number of revolutions of any ship's engine per unit fuel, for the benefit of saving in energy resources.

## Claims

1. A method of combustion of fuel in an engine which comprises exposing the fuel used in the combustion to a magnetic field from a magnet having a magnetic flux density of about 5 to 18 gauss at the S pole and a magnetic flux density of less than about 6 gauss at the N pole wherein the ratio of the magnetic flux density at the N pole to the magnetic flux density at the S pole is equal to or less than about 0.5, characterised by additionally exposing air supplied to the combustion engine to a magnetic field of a magnetic flux density of from 300 gauss to 3000 gauss at the S pole near a boiler of said engine.

**European Patent Office**

**EUROPEAN SEARCH REPORT**

Application Number

EP 92 31 1026

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 056 570 (CHOW)<br>* page 3, line 1 - page 5, line 30; figures * | 1 | F02B51/04<br>F02M27/04 |
| D,Y | PATENT ABSTRACTS OF JAPAN<br>vol. 15, no. 249 (M-1128)25 June 1991<br>& JP-A-30 79 912 ( SAKUMA TETSUO )<br>* abstract * | 1 | |

TECHNICAL FIELDS SEARCHED (Int. Cl.5)

F02B
F02M

The present search report has been drawn up for all claims

| Place of search | Date of completion of the search | Examiner |
|---|---|---|
| THE HAGUE | 21 JANUARY 1993 | MOUTON J.M.M.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document